# EUROPÄISCHE PATENTSCHRIFT

(11) **EP 0 655 382 B1**
(45) Veröffentlichungstag und Bekanntmachung des Hinweises auf die Patenterteilung: **05.03.1997**
(21) Anmeldenummer: 94116880.9
(22) Anmeldetag: 26.10.1994
(51) Int. Cl.: B62D 1/18

(54) **Teleskopierbare Lenksäule für Kraftfahrzeuge**
Telescopic steering column for motor vehicles
Colonne de direction téléscopique pour véhicules motorisés

(30) Priorität: 27.11.1993 DE 4340429
(43) Veröffentlichungstag der Anmeldung: 31.05.1995
(73) Patentinhaber: LEMFÖRDER METALLWAREN AG., D-49441 Lemförde (DE)
(72) Erfinder: Uphaus, Ludger, D-49434 Neuenkirchen (DE); Schmidt, Rainer, D-49356 Dieoholz (DE); Schäfer, Burkhard, D-28816 Stuhr-Seckenhausen (DE)

(56) Entgegenhaltungen:
- EP-A- 0 480 159
- DE-A- 3 513 340
- DE-A- 3 601 044
- DE-B- 1 270 337
- FR-A- 2 432 380

## Beschreibung

Die Erfindung beschreibt eine teleskopierbare Lenksäule für Kraftfahrzeuge mit einer oberen Lenkwelle, die in einem Mantelrohr geführt wird und an deren Ende das Lenkrad montiert ist, einer in das Lenkgetriebe eingreifenden unteren Lenkwelle und einer teleskopierbaren Lenkzwischenwelle, die die obere und die untere Lenkwelle über Kreuzgelenke miteinander verbindet. Die einzelnen Lenkwellenteile nehmen in jeder Stellung des Lenkrades einen räumlichen Beugewinkel zueinander ein, der sich während des Teleskopiervorganges ändert (eine solche Lenksäule ist zum Beispiel aus der FR-A-2 432 380 bekannt). Durch ungleich große Beugewinkel entsteht bekanntermaßen eine Ungleichförmigkeit zwischen der am Lenkrad eingeleiteten und der am Lenkgetriebe im gleichen Augenblick feststellbaren Drehbewegung. Sie setzt sich kumulativ aus den Teilungleichförmigkeiten in jedem Gelenk des Lenkwellenstranges zusammen. Liegen alle Lenkwellenteile in einer Ebene, so tritt bei gleich großen Beugewinkeln keine Ungleichförmigkeit auf.
Ungleiche Beugewinkel und ihre räumliche Anordnung führen jedoch immer dazu, daß mit Ungleichförmigkeiten der Drehbewegung gerechnet werden muß. Zu deren Ausgleich werden die Gabeln der Kreuzgelenke an der Lenkzwischenwelle versetzt zueinander montiert. Diese bauliche Gestaltung ermöglicht zumindest für eine Stellung der Lenksäule eine optimierte Gleichförmigkeit der Drehbewegung. Wird die Lenksäule aus dieser Position heraus axial verschoben, so entspricht dies nicht mehr der Optimalstellung. Es treten wiederum Ungleichförmigkeiten in der Drehbewegung auf, da sich mit der neuen Einstellung auch die Beugewinkel der Lenkwellenteile ändern. Das Lenkrad wird zwangsläufig während der axialen Verstellung der Lenksäule ebenfalls verdreht, sodaß es nicht mehr in der Lage verbleibt, für die es bei geradeausfahrt eingestellt war. Diese sogenannte "Neutralstellung" ist aber für jede Position der Lenksäule erwünscht.

Der Erfindung liegt die Aufgabe zugrunde, eine Lenksäule für Kraftfahrzeuge zu entwickeln, die einen weitgehenden Ausgleich der Ungleichförmigkeit der Drehbewegung auch bei axialer Verstellung der Lenksäule ermöglicht.

Die Erfindung löst diese Aufgabe mit den kennzeichnenden Merkmalen des Patentanspruches 1. Ausgestaltungen der Erfindung sind Gegenstand der Unteransprüche.

Bei einer erfindungsgemäßen Lenksäule besteht der Lenkwellenstrang aus drei Lenkwellen, einer oberen, an der das Lenkrad befestigt wird, einer unteren, die zur Anbindung an das Lenkgetriebe dient und einer Lenkzwischenwelle, die ihrerseits aus zwei teleskopierbaren Wellenteilen besteht. Die obere Lenkwelle ist in bekannter Weise in einem Mantelrohr der Lenksäule gelagert. Als Verbindung zwischen den Lenkwellenteilen dienen Kreuzgelenke. Erfindungsgemäß wird in der Lenkzwischenwelle eine Führung vorgesehen, die die beiden Wellenteile der Lenkzwischenwelle während der axialen Verstellung der Lenksäule in eine schraubenlinienförmige Bewegung versetzt. Diese Führung kann gemäß der vorgeschlagenen Lösung vorteilhaft aus einer einfachen Stiftverbindung bestehen.
Dabei wird in einem Wellenteil der Lenkzwischenwelle ein Langloch eingebracht, das eine schraubenlinienförmige Bahn beschreibt. In diesem Langloch ist ein Stift geführt, der in dem anderen Wellenteil der Lenkzwischenwelle festgesetzt ist. Der Stift überträgt die Drehbewegung und erzwingt bei der axialen Verstellung der Lenksäule durch den Fahrer eine relative Verdrehung der Stellung der Gabeln zueinander. Der Vorteil einer derartigen Führung in der Lenkzwischenwelle besteht erfindungsgemäß auch darin, daß das Lenkrad in jeder Stellung der Lenksäule in der "Neutralstellung" verbleibt, das heißt, es wird bei der Axialbewegung der Lenksäule nicht verdreht.
Die Führung kann sehr vorteilhaft auch aus Kugellaufbahnen bestehen, die in die Wellenteile der Lenkzwischenwelle eingeprägt werden. In diesen Laufbahnen werden Kugeln geführt. Als Vorteil einer derartigen Lösung muß gesehen werden, daß die Kugeln infolge ihrer geringen Reibung zusätzlich die axiale Verstellung der Lenksäule unterstützen.

Erfindungsgemäß sind weitere Ausgestaltungen der Lenkzwischenwelle realisierbar. So kann der Schiebeverband der beiden Wellenteile aus komplementären Konturen bestehen, die die Lenkzwischenwelle in die vorgeschriebene schraubenlinienförmige Bahn bringen. Im einfachsten Falle kann dies eine um die gemeinsame axiale Mitellinie der Wellenteile verdrehte Zahnwellenverbindung sein. Die eingebrachte Kontur besteht dann aus den Zahnsegmenten im ersten Wellenteil und den sie aufnehmenden Führungen im zweiten Wellenteil.

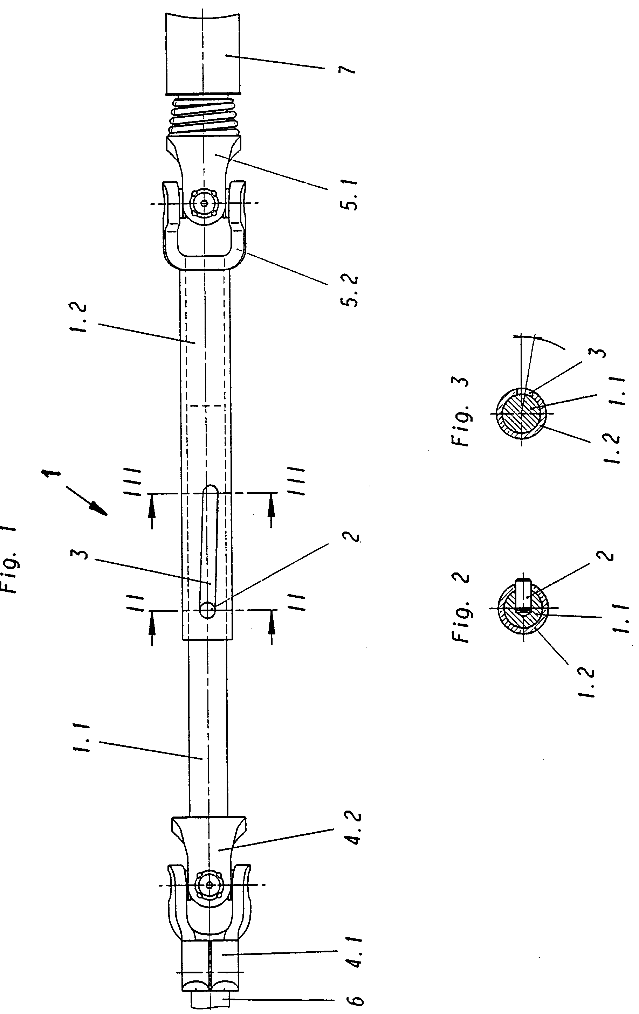

Ein Ausführungsbeispiel der Erfindung wird nachstehend unter bezugnahme auf die Zeichnung näher erläutert. Es zeigt:
Figur 1:
   ausschnittsweise die Lenkzwischenwelle mit einer Stiftverbindung
Figur 2:
   den Schnittverlauf II-II der Figur 1
und Figur 3:
   den Schnittverlauf III-III der Figur 2.

In Figur 1 ist ein Lenkwellenstrang einer Lenksäule dargestellt, der aus einer unteren Lenkwelle (6), einer oberen Lenkwelle (7) und einer Lenkzwischenwelle (1) besteht. Die untere Lenkwelle (6) dient der Anbindung an das Lenkgetriebe. Am äußeren Ende der oberen Lenkwelle (7) wird das Lenkrad montiert. Die obere Lenkwelle (7) ist in bekannter Weise in einem Mantelrohr gelagert. Zur Verbindung der einzelnen Wellenteile dienen Kreuzgelenke. Die Gabeln (4.2. und 5.2.) der Lenkzwischenwelle werden um ihre gemeinsame Mittellinie, die auch Mittellinie der Lenkzwischenwelle ist, gegeneinander verdreht montiert.
Durch diese Verdrehung ist für wenigstens eine Position der Lenksäule die Ungleichförmigkeit der Drehbewegung kompensierbar. Zur Bestimmung des Winkels, um den die Gabeln gegeneinander versetzt werden sind Berechnungsgleichungen bekannt, die nicht Gegenstand der Erfindung sind.
Die Lenkzwischenwelle (1) setzt sich aus einem ersten Wellenteil (1.1.) und einem zweiten Wellenteil (1.2.) zusammen. In der gezeigten Ausführung dient das zweite, hohlzylindrische Wellenteil (1.2.) zur axial verschieblichen Aufnahme des ersten Wellenteiles (1.1.). Wie zuvor bereits beschrieben kann die Ungleichförmigkeit der Drehbewegung für eine Position der Lenksäule durch Verdrehung der Gabeln an der Lenkzwischenwelle relativ einfach kompensiert werden. Um dies für alle Einstellungen einer axial verstellbaren Lenksäule zu erreichen, ist erfindungsgemäß innerhalb der Lenkzwischenwelle eine Führung vorgesehen, die während der axialen Verstellung der Lenksäule die Wellenteile (1.1. und 1.2.) der Lenkzwischenwelle in eine schraubenförmige Bahn zwingt. Dadurch wird eine Verdrehung der Gabeln (4.2. und 5.2.) relativ zueinander erreicht. Diese Verdrehung entspricht in jeder eingestellten Position des Lenkrades einer Optimierung. Die dargestellte Führung besteht aus einem schraubenförmig umlaufenden Langloch (3) in dem zweiten Wellenteil (1.2.), das zur Führung eines Stiftes (2) dient. Dieser Stift (2) ist in dem ersten Wellenteil (1.1.) festgesetzt und überträgt gleichfalls die Drehbewegung der Lenkwelle. Die beiden Wellenteile der Lenkzwischenwelle sind dabei gleitend ineinander geführt.

In Figur 2 ist der Schnittverlauf II-II aus Figur 1 dargestellt. Dieser zeigt die Verbindung der beiden Wellenteile (1.1. und 1.2.) der Lenkzwischenwelle mittels eines Stiftes (2), der in dem ersten Wellenteil (1.1.) in bekannter Weise festgesetzt ist. Geführt wird dieser Stift (2) in einem Langloch (3) innerhalb des zweiten Wellenteiles (1.2.).

Figur 3 zeigt die gleitend ineinander geführten Wellenteile (1.1. und 1.2.) der Lenkzwischenwelle. Das Langloch (3) dient dabei der Führung des Stiftes.

### BEZEICHNUNGSLISTE:

- 1: Lenkzwischenwelle
- 1.1.: erster Wellenteil
- 1.2.: zweiter Wellenteil
- 2: Stift
- 3: Langloch
- 4: unteres Kreuzgelenk
- 5: oberes Kreuzgelenk
- 6: untere Lenkwelle
- 7: obere Lenkwelle

## Patentansprüche

1. Teleskopierbare Lenksäule für Kraftfahrzeuge mit einer oberen Lenkwelle, die in einem Mantelrohr geführt wird und an deren Ende das Lenkrad montiert ist, einer in das Lenkgetriebe eingreifenden unteren Lenkwelle und einer teleskopierbaren Lenkzwischenwelle, die die obere und die untere Lenkwelle über Kreuzgelenke miteinander verbindet, wobei die einzelnen Lenkwellenteile in jeder Stellung des Lenkrades einen Beugewinkel im Raum zueinander einnehmen, der sich während des Teleskopiervorganges ändert,
dadurch gekennzeichnet, daß
eine Führung in der Lenkzwischenwelle die beiden Wellenteile (1.1. und 1.2.) in eine schraubenförmige Bewegung versetzt.

2. Teleskopierbare Lenksäule für Kraftfahrzeuge nach Anspruch 1,
dadurch gekennzeichnet, daß
die Führung in der Lenkzwischenwelle aus einer Stiftverbindung besteht.

3. Teleskopierbare Lenksäule für Kraftfahrzeuge nach Anspruch 2,
dadurch gekennzeichnet, daß
der Stift (2) in dem ersten Wellenteil (1.1.) festgesetzt ist und in einem Langloch (3) des zweiten Wellenteiles (1.2.) geführt wird.

4. Teleskopierbare Lenksäule für Kraftfahrzeuge nach Anspruch 1,
dadurch gekennzeichnet, daß
die Führung aus wenigstens einer in die Wellenteile (1.1. und 1.2.) eingeprägten Kugellaufbahn besteht, in der wenigstens eine Kugel geführt ist und somit die Wellenteile (1.1. und 1.2.) in eine schraubenförmige Bewegung versetzt.

5. Teleskopierbare Lenksäule für Kraftfahrzeuge nach Anspruch 1,
dadurch gekennzeichnet, daß
die Lenkzwischenwelle aus einer um die Mittellinie verdrehten Zahnwellenverbindung besteht.

## Claims

1. A telescopic steering column for motor vehicles with an upper steering shaft, which is guided in an outer column and at whose end the steering wheel is mounted, a lower steering shaft engaging in the steering gear and a telescopic intermediate steering shaft, which connects the upper and the lower steering shafts together via universal joints, the individual steering shaft parts adopting a deflection angle in space relative to one another in each position of the steering wheel, which angle changes during the telescoping procedure, characterised in that a guide means in the intermediate steering shaft sets the two shaft parts (1.1. and 1.2.) in helical motion.

2. A telescopic steering column for motor vehicles according to claim 1, characterised in that the guide in the intermediate steering shaft is formed by a rod connection.

3. A telescopic steering column for motor vehicles according to claim 2, characterised in that the rod (2) is fixed in the first shaft part (1.1.) and is guided in a slot (3) in the second shaft part (1.2.).

4. A telescopic steering column for motor vehicles according to claim 1, characterised in that the guide means is formed by at least one ball track stamped into the shaft parts (1.1. and 1.2.), in which ball track at least one ball is guided and thereby sets the shaft parts (1.1. and 1.2.) in helical motion.

5. A telescopic steering column for motor vehicles according to claim 1, characterised in that the intermediate steering shaft is formed by a serrated shaft connection rotated about the centre line.

## Revendications

1. Colonne de direction télescopique pour véhicules automobiles, comportant un axe de direction supérieur, qui est guidé dans un tube de protection et sur une extrémité duquel est monté le volant de direction, un axe de direction inférieur qui s'engrène dans le mécanisme de direction et un axe de direction intermédiaire télescopique, qui relie mutuellement les axes de direction supérieur et inférieur par l'intermédiaire de joints de cardan, les parties individuelles des axes de direction faisant, dans chaque position du volant de direction, un angle de flexion spatial qui varie pendant l'opération de télescopage, caractérisée en ce qu'une coulisse disposée dans l'axe de direction intermédiaire entraîne les deux parties d'axe (1.1. et 1.2.) dans un mouvement hélicoïdal.

2. Colonne de direction télescopique pour véhicules à moteur selon la revendication 1, caractérisée en ce que la coulisse de l'axe de direction intermédiaire est constituée d'une liaison à goupille.

3. Colonne de direction télescopique pour véhicules à moteur selon la revendication 2, caractérisée en ce que la goupille (2) est fixée dans la première partie d'axe (1.1.) et guidée dans un orifice allongé (3) de la deuxième partie d'axe (1.2.).

4. Colonne de direction télescopique pour véhicules à moteur selon la revendication 1, caractérisée en ce que la coulisse est constituée d'au moins une voie de roulement à billes ménagée dans les parties d'axe (1.1. et 1.2.), dans laquelle une bille est guidée et entraîne donc les parties d'axe (1.1. et 1.2.) dans un mouvement hélicoïdal.

5. Colonne de direction télescopique pour véhicules à moteur, caractérisée en ce que l'axe de direction intermédiaire est constituée d'une liaison à arbres cannelés qui tournent autour de l'axe central.
